# EUROPEAN PATENT SPECIFICATION

(11) **EP 0 400 149 B1**
(45) Date of publication and mention of the grant of the patent: **25.10.1995**
(21) Application number: 89903239.5
(22) Date of filing: 10.03.1989
(51) Int. Cl.: B32B 5/18, B32B 5/24, B29C 39/12, B60N 2/00, B29K 75/00

(54) **INTEGRAL FOAM PRODUCT HAVING THREE-LAYER LAMINATE SKIN**
INTEGRALSCHAUMPRODUKT, BESTEHEND AUS EINER DREISCHICHTIGEN LAMINIERTEN HAUT
PRODUIT EN MOUSSE INTEGRALE PRESENTANT UNE PELLICULE SUPERFICIELLE STRATIFIEE A TROIS COUCHES

(30) Priority: 10.03.1988 JP 54996/88
(43) Date of publication of application: 05.12.1990
(73) Proprietor: NAMBA PRESS WORKS CO., LTD., Kurashiki-City Okayama Prefecture 711 (JP)
(72) Inventor: GOTO, Fumio, Okayama Prefecture 710-01 (JP); OGAWA, Taro, Okayama Prefecture 710 (JP)
(74) Representative: Allden, Thomas Stanley
(86) International application number: PCT/JP89/00265
(87) International publication number: WO 89/08550

(56) References cited:
- FR-B- 2 470 566
- GB-A- 1 423 817
- JP-A-50 140 602
- JP-A-61 293 837
- US-A- 4 247 586

## Description

This invention relates to integrally foamed articles.

There is a well known process for manufacturing an integrally foamed article including:
a) providing a permeable cover fabric,
b) configuring the permeable fabric into a substantially closed configuration which substantially corresponds to a final contour of a desired final product, and
c) pouring a liquid foamable mixture such as a liquid polyurethane mixture into said closed configuration causing the mixture to foam and expand in situ and to be integral with the interior surface of said cover fabric. In this instance, the cover fabric must be of permeable nature in order to expel gases produced during foaming of the mixture and air entrapped inside the cover fabric.

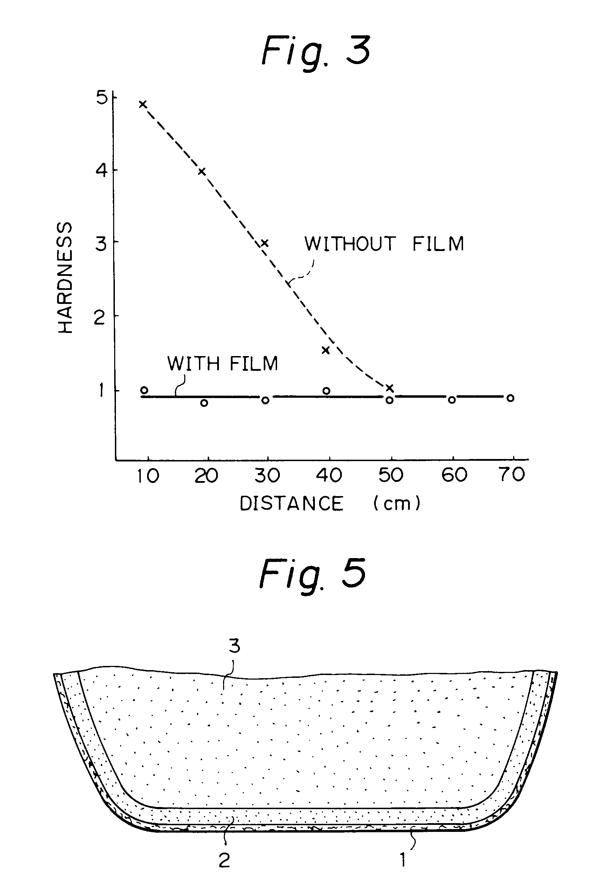

The permeable cover fabric, however, has many drawbacks in that the liquid foamable mixture poured onto the inner surface of the cover fabric penetrates into the cover fabric itself and leaks out of the cover fabric so that any cured and hardened spots or areas are formed locally on the surface of the fabric to spoil the appearance of the final product, to make the surface of the foamed article stiffened to touch, and to lower the quality of the foamed article. In an attempt to avoid these defects, French patent No. 2,470,566 to Societe Industrielle Bertrand Faure, January 13, 1984 discloses a method as illustrated in Figure 5 of the attached drawings. In this method, a permeable fabric 1 of natural or synthetic fibres and a thin layer of synthetic foam 2 adhered thereto make up a cover material into which highly catalyzed reactive polyurethane stock is directly poured while it is still in the flowable state though beginning its chemical reaction so as to foam and expand to form a body foam 3. It is said in this French patent that the body foam 3 penetrates slightly into the thin foam 2 to form a "superficial layer" which provides strong bonding between the body 3 and the thin layer 2, yet allowing the layer 2 to be permeable, and the "superficial layer" never reaches the cover fabric 1 nor causes locally stiffened areas to be produced therein.

According to the above French patent, the "superficial layer" is formed by the fact that the poured mixture, while rapidly changing from a liquid state to a creamy state, penetrates only "superficially" into the thin foam 2 to form a "stiffened layer" sufficiently hardened to assure good bonding between the foam body 3 and the thin foam 2.

Thus, the French patent alleges that it can obviate such problems heretofore encountered in the integrally foamed product by a direct pouring method, that is to say the leaking out of the foamable mixture through the cover fabric, stiffened touch and spoiled appearance of the resultant product.

It is noted, however, that the existence of the stiffened "superficial layer" between the body foam and the thin foam layer of the product actually provides a stiff and uncomfortable touch when one contacts or presses the outer surface of the product in an actual use thereof.

Another problem resides in that poured creamy foamable mixture penetrates partially into the thin foam layer 2 to cause the flow resistance to the poured material to be larger and the fluidity of the material to be lowered. Thus, the teaching in the aforementioned French patent is not suited particularly to manufacturing thin foamed products because the foamable material poured into a relatively thin or restricted space hardly flows therethrough to reach eventually the overall length of the product to be formed so that defective portions may occur not attaining the prescribed thickness of foam.

Furthermore, the foamable material poured into relatively thin spaces suffers from larger flow resistance so that it foams and expands insufficiently in the area near the pouring site and presents over-charged conditions and increased hardness due to high density thereat, which results in undesirable foamed products of non-uniform resiliency.

Another prior art proposal is featured in GB-A-1423817 which generally discloses an integrally foamed article comprising a threefold-laminated cover material formed of an outermost permeable cover fabric, an intermediate thin foam layer bonded to the inside of the cover fabric and an innermost shielding film bonded to the inside of the intermediate thin foam layer, the threefold-laminated cover material being shaped into a configuration substantially corresponding to a desired final contour of the article, and a body foam resulting from a foamable mixture poured in a liquid or creamy state into the configured cover material and bonded integrally to the shielding film.

More particularly, in that particular prior art proposal, the shielding film is of impermeable material which prevents the body foam from entering the foam layer or reaching the cover fabric.

A disadvantage of that prior art proposal is that the process is inherently restricted to where the cover material is of an open configuration since the foaming of the foamable mixture, which is preferably said to be a polyurethane foam, produces carbon dioxide, which must be allowed to escape, which, of course, it cannot do through the impermeable shielding film.

It is an object of the present invention to provide an integrally foamed article having a cover material of a closed configuration, which is of uniform resiliency and comfortable touch without any locally stiffened spots.

In accordance with the present invention as claimed, this object is accomplished in that the aforesaid generally disclosed integrally foamed article is characterized by the threefold-laminated cover material having a closed configuration into which the foamable mixture is poured, and by the shielding film being provided with a number of air holes formed therein which are minutely sized to allow gases produced during the foaming reaction of the foamable mixture to pass therethrough and escape through the intermediate thin foam layer and the outermost permeable cover fabric but prevent the foamable mixture from passing through the air holes to the intermediate thin foam layer by which to obviate any stiffened layers being formed between the body foam and the intermediate thin foam layer.

In the integrally foamed article of the invention, the intermediate thin foam layer is a slab foam such as polyurethane thin foam bonded to the inside surface of the permeable cover fabric as by adhesives and the innermost shielding film with minute air holes may be a polyurethane or polyvinyl chloride film also bonded as by adhesives to the inside surface of the slab foam.

The shielding film utilizable in the present invention preferably is selected from materials having good smoothness to aid in good flowing of the poured foamable mixture and also having the ability strongly to adhere to the cured body foam, and preferably is a polyurethane or polyvinyl chloride film.

The foamable mixture utilizable in the present invention preferably is a highly reactive polyurethane foamable composition.

An advantageous feature of the present invention resides in the fact that due to the provision of the innermost shielding film capable of allowing gases and air to pass therethrough, but not permitting foamable compositions to pass, the foamable composition is completely prevented from penetrating into the intermediate slab layer and no stiffened layer in any sense is permitted to occur at the interface between the body foam and the slab layer. Thus, the integrallyfoamed article according to the present invention can have a truly resilient and comfortable touch of the body foam itself when contacted from the outside of the article in contrast to the prior art product of the aforesaid French patent because of the "stiffened layer" existing between the cover fabric and the body foam.

Moreover, due to the provision of the innermost shielding film (particularly if having excellent smoothness), the foamable composition poured thereon can exhibit far more excellent fluidity than if it had to flow directly over the slab foam layer. Accordingly, the foamable liquid or creamy composition poured onto the shielding film can enter smoothly and extensively into thin or restricted spaces without being obstructed in any way thereby to yield desired foamed articles having a body foam of prescribed thickness and density properly distributed throughout the entire length. Furthermore, due to its excellent fluidity, the foamable compostion poured onto the shielding film can spread over the entire portions of the intended article rapidly, i.e., before it completes substantial degrees of foaming reaction and, therefore, it undergoes substantially concurrently and uniformly foaming and expanding processes throughout the entire portions of the article to yield uniform foaming and hardness throughout the article.

In order that the invention may be well understood there will now be described an embodiment thereof, given by way of example, reference being made to the accompanying drawings, in which:
Figure 1 is a fragmentary enlarged sectional view of a threefold-laminated cover material utilizable to manufacture an integrally foamed article embodying the present invention;
Figure 2 is a perspective view, with a portion removed, of an armrest as an example of a relatively thin integrally foamed article according to the present invention;
Figure 3 is a graph showing test results conducted on foamed articles of the invention (with film) and a control article (without film) with the abscissa indicating distances attained by foamable compositons before completing their foaming and expanding, and the ordinate indicating hardness of foamed bodies at various distances;
Figure 4 is a perspective view of a pipe made of the cover material used in the comparative test in Figure 3; and
Figure 5 is a partial sectional view of an integrally foamed article of the prior art.

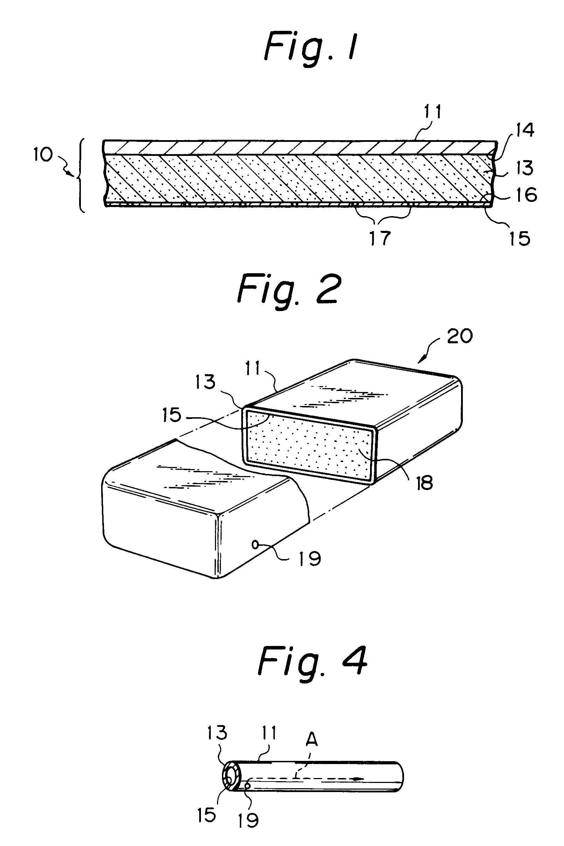

Referring first to Figure 1, a threefold-laminated cover material 10 includes a permeable cover fabric 11 such as knitted or woven fabric, and a slab foam 13 such as soft polyurethane foam bonded to the inner side of the fabric 11 at an interface 14. The slab foam 13 serves to produce a soft feeling or a resilient touch on the surface of the final product as well as to discharge gases produced during the foaming reaction, as will be discussed hereinafter. Preferably, the slab foam 13 is of a few millimeters or more in thickness. To the slab foam 13 is bonded a shielding film 15 at an interface 16.

The shielding film 15 may be polyurethane film of 40-100 microns thick, or polyvinyl chloride film of 50-500 microns thick. These films are formed with a number of air holes 17 minute enough to allow gases and air to pass therethrough, but prevent liquid or creamy foamable composition such as reactive polyurethane stock from passing therethrough Where voluminous foamable compositions are to be involved such that a large quantity of gas is produced during the foaming process, it is desirable that a correspondingly large number of air holes 17 be formed in the film 15.

The shielding film 15 with its minute air holes 17 is of excellent smoothness to assist flowability of the foamable compositon poured thereon as will be understood from Figure 3 explained below, and is also capable of being strongly adhered to foamed polyurethane resulting from the poured composition.

The threefold-laminated cover material 10 is subjected to a shaping process wherein it is shaped into a substantially closed configuration corresponding to a final contour of a desired final product, and then receives therein a foamable mixture such as foamable polyurethane stock poured directly into said closed configuration to provide an integrally foamed article.

Such an article is illustrated in Figure 2 as an armrest 20 with a portion thereof cut away to show clearly the interior structure. The cover fabric 11 has the slab foam 13 bonded to its inner surface as a backing permeable layer to the inside of which the shielding film 15 with minute air holes is bonded to complete the laminated three-layer material 10. This material is shaped into the contour of the final product, i.e., a rectangular armrest in this instance, as by sewing or welding techniques. Into this shaped material is poured the foamable mixture in a liquid or creamy state which foams and expands in situ to form a foamed body 18. For pouring the mixture, an appropriate injecting means (not shown) is inserted as through a spot 19 into the shaped material 10. When a predetermined amount of the foamable mixture has been poured into the shaped material, the injecting means is removed therefrom. Thereafter, the pierced spot 19 will close naturally due to the resilient nature of the fabric 11, but even so it is preferred to place the inserting spot 19 at any hidden site on the final product.

The foamed body 18, upon completely expanding, adheres to the shielding film 15 strongly and will not be peeled off therefrom in the usual usage of the article.

TABLE I below represents test results concerning the bonding strength between the foamed body and the shielding film. In this test, threefold-laminated cover materials were used comprising a jersey as the cover fabric commercially available under the tradename "Polykral" , soft polyurethaane foam of 2 mm thick as the slab foam, and polyurethane or polyvinyl chloride films as listed in TABLE I as the shielding film with minute airholes.

**TABLE I**

| Bonding Strength of Shielding Films | | | |
|---|---|---|---|
| Type of Shielding Films (Thickness) Breaking load** | polyurethane (100 µ) | PVC (470 µ) | |
| | | surface-processed* | non-processed |
| Run 1 | 0.55² | 0.54¹ | 0.30¹ |
| Run 2 | 0.60² | 0.50¹ | 0.15¹ |
| Run 3 | 0.62² | 0.60² | 0.31¹ |
| Run 4 | 0.57² | 0.56² | 0.25¹ |
| Run 5 | 0.64² | 0.58² | 0.21¹ |
| Average | 0.60 | 0.56 | 0.24 |

| | | | |
|---|---|---|---|
| * Film surfaces were processed with acrylic primers. | | | |
| ** Breaking load in Kg/25 mm (90° peel off) | | | |
| ¹ Numerals with suffix¹ indicates breaking occurred at the interface between the shielding film and the body foam. | | | |
| ² Numerals with suffix² indicates breaking of the body foam itself with no peeling occurred at the interface. | | | |

As seen from TABLE I , the threefold-laminated cover material has excellent bonding strength between the innermost shielding film and the foamed body; polyurethane shielding films and processed PVC are found to be particularly suited to manufacturing integrally foamed articles with minimum peeling off of the films. In these test runs, any traces of a "stiffened layer" resulting from the poured foamable mixtures passing through the minute air holes in the shielding films were not noted anywhere.

Now referring to Figures 3 and 4, smoothness of the shielding films will be explained in relation to a test conducted using the cover material in the form of a pipe as shown in Figure 4 of the size of 37 mm outer diameter and 30 mm inner diameter. Two types of pipes were prepared, one being of the present threefold-laminated cover material and the other of a prior art fabric with a backing foam layer and without a shielding film. The pipe represented in Figure 4 was made of the threefold-laminated material with the cover fabric 11, slab foam 13 of 2 mm thick and shielding film 15. Similar pipes were made of the prior art fabric as controls without shielding films. Both pipes with films and without films were tested by inserting an injection nozzle (not shown) through a spot 19 into the interior of the pipe, pouring through the nozzle an amount of foamable polyurethane mixture, allowing the mixture to foam and expand while flowing in the direction of an arrow A, and measuring the distances from the spot 19 to the location reached by foamed mixtures and hardness of the foamed polyurethane at various distances.

Figure 3 depicts the results of such comparative tests in which the ordinate represents the hardness of the foamed polyurethane measured by "Aska C" durometer and the abscissa shows the distance (cm)attained by the foamed polyurethane. The broken line indicates measured values for the control fabric (without the shielding film) and the solid line indicates measured values for the threefold-laminated cover material.

As viewed from Figure 3, foamed articles using the control fabric (without the shielding film) produce hardened portions adjacent to the injection point (19) and rapidly decreasing hardness along the distance from the injection point. Further, foaming stock in the control fabric could only reach at maximum a 50 cm point from the injection point. In contrast, foamed articles using the threefold-laminated material could reach a 70cm point from the injection point (17% longer) on the basis of the same amount of poured stock as the control fabric and yet the hardness of the foam is substantially uniform throughout the entire length and of a low level (soft touch). Thus, the comparative tests show that the present invention can advantageously present foamed articles of a soft or resilient nature and of a substantially uniform hardness throughout the entire portions thereof, particularly for relatively thin articles.

Summarising, In accordance with the present invention, an integrally foamed article can be prepared which is covered by the three-fold-laminated cover material having at its inner side the shielding film with minute air holes allowing gases and air to be well discharged during foaming processes in the same manner as the conventional permeable fabric. By employment of the shielding film, the foamable mixture poured thereon can be increasingly improved in its fluidity so that it can flow through a far more longer distance while in the initial stage of the foaming process. Thus, even where a relatively thin article is to be produced, integrally foaming techniques can be utilized to form a desired article having a prescribed uniform thickness throughout its entire length.

Further beneficial feature of the invention resides in that the film completely prevents the body foam from entering the backing slab foam layer so as to avoid the possibility of forming a "stiffened layer" which otherwise would render the final product uncomfortable in touch. Prevention of the "stiffened layer" makes it possible to use cover fabrics of a high grade resiliency in the manufacture of integrally foamed articles without losing its own characteristics of softness and comfortable feeling.

Further, the shielding film has been found not to cause peeling off or separation of cover materials from the body foam under the usual conditions of use in contradiction to the alleged effect of the "stiffened layer" in the abovementioned French patent to act as a strong bonding layer between the body foam and the cover fabric.

## Claims

1. An integrally foamed article comprising a threefold-laminated cover material (10) formed of an outermost permeable cover fabric (11), an intermediate thin foam layer (13) bonded to the inside surface of the cover fabric (11) and an innermost shielding film (15) bonded to the inside of the intermediate thin foam layer (13), the threefold-laminated cover material (10) being shaped into a configuration substantially corresponding to a desired final contour of the article, and a body foam (18) resulting from a foamable mixture poured in a liquid or creamy state into the configured cover material (10) and bonded integrally to the shielding film (15); characterized in that the threefold-laminated cover material (10) has a closed configuration into which the foamable mixture is poured, and the shielding film (15) has a number of air holes formed therein which are minutely sized to allow gases produced during the foaming reaction of the foamable mixture to pass therethrough and escape through the intermediate thin foam layer (13) and the outermost permeable cover fabric but prevent the foamable mixture from passing therethrough to the intermediate thin foam layer (13) by which to obviate any stiffened layers being formed between the body foam (18) and the intermediate thin foam layer (13).

2. An integrally foamed article as claimed in claim 1, wherein the permeable cover fabric (11) is knitted or woven fabric made of natural or synthetic fibres.

3. An integrally foamed article as claimed in claim 1 or claim 2, wherein the intermediate thin foam layer (13) is a soft polyurethane foam of about 2 - 10 mm thickness.

4. An integrally foamed article as claimed in any of the preceding claims, wherein the shielding film (15) is selected from polyurethane film or polyvinyl chloride film.

5. An integrally foamed article as claimed in Claim 4, wherein the shielding film (15) is a polyvinyl chloride film surface-processed so as to improve its bonding property with the body foam (18).

6. An integrally foamed article as claimed in any of the preceding claims, wherein the foamable mixture is a reactive polyurethane stock.

7. An integrally foamed article as claimed in Claim 1, wherein the cover fabric (11) is a jersey fabric to the inside of which is adhered a soft polyurethane foam of 2 mm thickness as the intermediate layer (13), to the inside of which polyurethane film formed with the minute air holes is adhered as the shielding film (15), the body foam (18) and the shielding film (15) being bonded together integrally with each other in the foaming process.

8. An integrally foamed article as claimed in Claim 7, wherein the body foam (18) is of relatively thin thickness.

## Patentansprüche

1. Integralschaumprodukt mit einem dreifachlaminierten Deckmaterial (10), das aus einem äußersten durchlässigen Deckgewebe (11) gebildet ist, mit einer dünnen Zwischenschaumschicht (13), die mit der Innenfläche des Deckgewebes (11) verbunden ist, und mit einem innersten Schutzfilm (15), der mit der Innenseite der dünnen Zwischenschaumschicht (13) verbunden ist, wobei das dreifachlaminierte Deckmaterial (10) in eine Konfiguration geformt ist, die im wesentlichen der gewünschten Endkontur des Produktes entspricht, und mit einem Schaumkörper (18), der aus einer schäumbaren Mischung gebildet ist, die im flüssigen oder pastösen Zustand in das konfigurierte Deckmaterial (10) gegossen ist und integral mit dem Schutzfilm (15) verbunden ist, dadurch gekennzeichnet, daß das dreifachlaminierte Deckmaterial (10) eine geschlossene Konfiguration aufweist, in die die schäumbare Mischung gegossen wird, und daß in dem Schutzfilm (15) eine Anzahl von Luftlöchern gebildet sind, die eine kleine Größe aufweisen, um den Durchtritt von Gasen zu erlauben, die bei der Schaumreaktion der schäumbaren Mischung entstehen, und um deren Entweichen durch die dünne Zwischenschaumschicht (13) und das äußerste durchlässige Deckgewebe zu erlauben, jedoch zu verhindern, daß die schäumbare Mischung hindurch zu der dünnen Zwischenschaumschicht (13) gelangt, um so die Bildung von versteiften Schichten zwischen dem Schaumkörper (18) und der dünnen Zwischenschaumschicht (13) zu verhindern.

2. Integralschaumprodukt nach Anspruch 1, bei dem das durchlässige Deckgewebe (11) ein gewirktes oder gewebtes Material aus natürlichen oder synthetischen Fasern ist.

3. Integralschaumprodukt nach Anspruch 1 oder 2, bei dem die dünne Zwischenschaumschicht (13) ein weicher Polyurethanschaum von ungefähr 2 bis 10 mm Dicke ist.

4. Integralschaumprodukt nach irgendeinem der vorhergehenden Ansprüche, bei dem der Schutzfilm (15) ein Polyurethanfilm oder ein Polyvinylchloridfilm ist.

5. Integralschaumprodukt nach Anspruch 4, bei dem der Schutzfilm (15) ein oberflächenbehandelter Polyvinylchloridfilm ist, um seine Bindefähigkeit zum Schaumkörper (18) zu verbessern.

6. Integralschaumprodukt nach irgendeinem der vorhergehenden Ansprüche, bei dem die schäumbare Mischung ein reaktiver Polyurethanvorrat ist.

7. Integralschaumprodukt nach Anspruch 1, bei dem das Deckgewebe (11) ein Jersey-Gewebe ist, an dessen Innenseite ein weicher Polyurethanschaum von 2 mm Dicke als die Zwischenschicht (13) anhaftet, wobei an deren Innenseite ein Polyurethanfilm mit kleinen Luftlöchern als Schutzfilm (15) anhaftet, wobei der Schaumkörper (18) und der Schutzfilm (15) jeweils miteinander bei dem Schaumprozeß integral verbunden werden.

8. Integralschaumprodukt nach Anspruch 7, bei dem der Schaumkörper (18) relativ dünn ist.

## Revendications

1. Article de mousse à peau intégrée comprenant un matériau de couverture stratifié à trois couches (10) constitué d'une étoffe de couverture perméable se trouvant le plus à l'extérieur (11), d'une mince couche de mousse intermédiaire (13) liée à la surface interne de l'étoffe de couverture (11) et d'un film de protection se trouvant le plus en profondeur (15) lié à l'intérieur de la mince couche de mousse intermédiaire (13), le matériau de couverture stratifié à trois couches (10) étant façonné dans une configuration correspondant pratiquement au contour final souhaité de l'article, et une mousse de corps (18) résultante d'un mélange transformable en mousse versé dans un état liquide ou crémeux dans le matériau de couverture configuré (10) et intégralement liée au film de protection (15); caractérisé en ce que le matériau de couverture stratifié à trois couches (10) présente une configuration fermée dans laquelle on verse le mélange transformable en mousse et le film de protection (15) présente un nombre de trous d'air formés dans celui-ci, qui sont dimensionnés de manière minuscule pour permettre aux gaz produits pendant la réaction de moussage du mélange transformable en mousse de passer à travers ceux-ci et de s'échapper à travers la mince couche de mousse intermédiaire (13) et l'étoffe de couverture perméable se trouvant le plus à l'extérieur, mais pour empêcher que le mélange transformable en mousse ne passe à travers ceux-ci vers la mince couche de mousse intermédiaire (13), par le moyen duquel on évite que des couches devenues raides ne soient formées entre la mousse de corps (18) et la mince couche de mousse intermédiaire (13).

2. Article de mousse à peau intégrée selon la revendication 1, dans lequel l'étoffe de couverture perméable (11) est une étoffe tricotée ou tissée constituée de fibres naturelles ou synthétiques.

3. Article de mousse à peau intégrée selon la revendication 1 ou la revendication 2, dans lequel la mince couche de mousse intermédiaire (13) est une mousse molle de polyuréthane d'environ 2-10 mm d'épaisseur.

4. Article de mousse à peau intégrée selon l'une quelconque des revendications précédentes, dans lequel le film de protection (15) est choisi parmi un film de polyuréthane ou un film de poly(chlorure de vinyle).

5. Article de mousse à peau intégrée selon la revendication 4, dans lequel le film de protection (15) est un film de poly(chlorure de vinyle) traité en surface, afin d'améliorer sa propriété de liaison avec la mousse de corps (18).

6. Article de mousse à peau intégrée selon l'une quelconque des revendications précédentes, dans lequel le mélange transformable en mousse est une matière première réactive de polyuréthane.

7. Article de mousse à peau intégrée selon la revendication 1, dans lequel l'étoffe de couverture (11) est une étoffe de jersey, à l'intérieur de laquelle on fait adhérer une mousse molle de polyuréthane d'épaisseur 2 mm en tant que couche intermédiaire (13), à l'intérieur de laquelle on fait adhérer un film de polyuréthane formé avec les minuscules trous d'air en tant que film de protection (15), la mousse de corps (18) et le film de protection (15) étant liés ensemble intégralement l'un avec l'autre dans le procédé de moussage.

8. Article de mousse à peau intégrée selon la revendication 7, dans lequel la mousse de corps (18) est d'une épaisseur relativement mince.
